(19) Europäisches Patentamt | European Patent Office | Office européen des brevets

(11) **EP 2 693 917 B1**

(12) **EUROPEAN PATENT SPECIFICATION**

(45) Date of publication and mention
of the grant of the patent:
**21.11.2018 Bulletin 2018/47**

(21) Application number: **12767550.2**

(22) Date of filing: **05.04.2012**

(51) Int Cl.:
*D06N 7/00* <sup>(2006.01)</sup>       *B32B 37/06* <sup>(2006.01)</sup>
*D06M 10/00* <sup>(2006.01)</sup>       *H05B 6/80* <sup>(2006.01)</sup>

(86) International application number:
**PCT/AU2012/000351**

(87) International publication number:
**WO 2012/135908 (11.10.2012 Gazette 2012/41)**

(54) **MICROWAVE CURING OF CARPET PLASTISOL**

MIKROWELLENHÄRTUNG VON TEPPICHPLASTISOL

DURCISSEMENT PAR MICRO-ONDES DE PLASTISOL DE MOQUETTE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **07.04.2011 AU 2011901300**

(43) Date of publication of application:
**12.02.2014 Bulletin 2014/07**

(73) Proprietor: **Interface Aust Pty Limited
Surry Hills, NSW 2010 (AU)**

(72) Inventors:
• **BOYD, Michael Lindsay
Picton, NSW 2571 (AU)**

• **DAVIDSON, William Lyall
Bargo, NSW 2574 (AU)**

(74) Representative: **Schwöbel, Thilo K. et al
Kutzenberger Wolff & Partner
Theodor-Heuss-Ring 23
50668 Köln (DE)**

(56) References cited:
**WO-A1-2009/059366       GB-A- 1 267 654
US-A- 4 234 636       US-A- 4 689 256
US-A1- 2007 082 172       US-B1- 7 368 692**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

Printed by Jouve, 75001 PARIS (FR)

## Description

### Technical Field

The present invention relates to method of microwave curing of a carpet plastisol and to the carpet produced thereby. An apparatus for curing carpet plastisol is also described.

### Background of the invention

Carpets, such as free-lay carpet or backed carpet tiles are typically prepared as either a tufted or a fusion bonded carpet material having a wear fibrous or pile surface from which pile yarns upwardly project. Carpet tiles differ from the production of ordinary tufted or other fibrous-faced carpets because there is no requirement on a typical carpet for a heavy backing layer. In a carpet tile, a rigid stabilized mass of a thermoplastic backing layer is required in order to hold down the carpet tile so that it can function as a free-lay carpet tile. Generally, the backing layer has a high filler content (e.g., limestone) and is employed with various scrim materials such as glass fibres, polyester or a combinations thereof, to impart dimensional stability. Generally the thermoplastic backing layer is one or more polyvinyl chloride layers.

As an example, a tufted carpet tile generally comprises a primary backing base sheet material such as polyester or polypropylene having a plurality of tufted yarns such as Nylon® through the primary backing to form a wear surface of loop or cut pile (carpet pile). The primary backing is used to tuft the carpet yarn into and to provide the required top cloth of the product. A precoat of a latex type material such as EVA (polyethylene vinyl acetate) or carboxylated styrene-butadiene-styrene may be applied on the back (underside) surface to bond the yarn to the primary backing and to aid in the securing of the primary backing to the backing layer. The backing layer may be comprised of a first PVC layer, a fiberglass layer and a second PVC layer (reback layer) - the first layer of PVC bonding the primary backing to the fiberglass layer, the fiberglass layer ensuring dimensional stability of the carpet tile and the second layer of PVC gluing the layers above it and providing the final backing of the carpet tile.

Fusion-bonded carpet generally has a similar backing to tufted carpet except that the fusion-bonded carpet has a plurality of cut pile yarns of nylon or other suitable fibrous material implanted in an adhesive layer, particularly thermoplastic such as PVC or hot-melt adhesive, which may be further laminated to a reinforcement or substrate layer of a woven or non-woven material such as fibreglass, Nylon®, polypropylene or polyester. The plurality of fibrous yarns are bonded to and extend generally upright from the adhesive base layer to form the wear surface.

In the process of production of carpet tiles generally the thermoplastic layer is applied to the primary backing or latex precoat as a plastisol i.e., a dispersion of thermoplastic resin in a plasticizer forming a paste that gels when heated. Heating is typically achieved indirectly by forwarding (natural gas fired) heated oil through pipes in proximity to the thermoplastic backing layer. However using hot oil has a number of disadvantages including the need for the provision of a number of oil heat generators, the cost of heating the oil, heat loss, low heat efficiency, the need for use of pumps and piping to pump oil though a pipeline and the time taken for gelling the plastisol. In addition natural gas is a non-renewable energy source.

In the context of the present invention, reference can be made to US 4,234,636 A, US 7,368,692 B1, GB 1 267 654 A and US 4,689,256 A.

### Object of the invention

It is an object of the present invention to substantially overcome or at least ameliorate one or more of the above disadvantages or at least provide a suitable alternative.

### Definitions

The following are some definitions that may be helpful in understanding the description of the present invention. These are intended as general definitions and should in no way limit the scope of the present invention to those terms alone, but are put forth for a better understanding of the following description.

Unless the context requires otherwise or specifically stated to the contrary, integers, steps, or elements of the invention recited herein as singular integers, steps or elements clearly encompass both singular and plural forms of the recited integers, steps or elements.

Throughout this specification, unless the context requires otherwise, the word "comprise", or variations such as "comprises" or "comprising", will be understood to imply the inclusion of a stated step or element or integer or group of steps or elements or integers, but not the exclusion of any other step or element or integer or group of elements or integers. Thus, in the context of this specification, the term "comprising" means "including principally, but not necessarily solely".

The information provided herein and references cited are provided solely to assist the understanding of the reader, and do not constitute an admission that any of the references or information is prior art to the present invention.

The term "filament" or "filaments" means strands of extreme or indefinite length.
The term "yarn" means a collection of numerous filaments which may or may not be entangled, twisted or laid together.

The term "texturing" means any operation of filaments which results in crimping, looping or otherwise modifying such filaments to increase cover, resilience, bulk or to provide a different surface texture or hand. It follows that a "bulked continuous filament" is a filament which has been subjected to one or more "texturing" operation(s).

By "biobased" is meant that the relevant material is made from substances derived from living matter.

A biobased fibre is herein defined as a fibre comprised of a polymer, or a blend or alloy of two or more polymers, in which one or more of said polymers has as at least one of the components making up the macromolecule thereof a substance ultimately derived wholly or partially from a biological, renewable, source. Such source may, for example, be a plant, or part of said plant such as roots, stems, leaves, flowers or seeds.

It will be understood that although the description of the carpet or carpet tile of the present invention has been given in terms of "layers", that following processing the carpet tile is a bonded unitary integral structure in which the individual layers are not necessarily readily discernible or removable from one another.

## Summary of the Invention

There is disclosed herein a method of making a floor covering comprising:

tufting or implanting a fibrous material or yarn into a primary backing;
optionally precoating the underside of the primary backing layer by applying a precoating composition followed by curing the precoating;
applying a thermoplastic backing layer to the optionally precoated primary backing layer, and microwave curing the thermoplastic backing layer.

There is also disclosed herein a method of making a floor covering comprising:

coating a first layer of a thermoplastic resin plastisol on a support surface;
optionally placing a dimensionally stable sheet material onto the top surface of the first layer and heating the layer to gel the layer and position the sheet material;
optionally applying a second layer of a thermoplastic resin plastisol onto the gelled surface of the first layer;
tufting or implanting a fibrous material or yarn into a primary backing material;
optionally precoating the underside of the primary backing;
optionally coating a thermoplastic resin plastisol over the optionally precoated primary backing layer;
layering the optionally precoated primary backing onto the top surface of the plastisol of the first or second thermoplastic resin layer to form a floor covering;
microwave heating the floor covering so formed to fuse the thermoplastic layers into an integrally-fused backing layer;
cooling the flooring covering; and
optionally cutting the floor covering into a carpet tile.

The present inventors have found that microwaves can be used effectively as a substitute form of energy instead of natural gas/heated oil in the heating and drying processes used in curing of thermoplastic backing in making carpets/carpet tiles. Microwave technology can be used to replace existing traditionally natural gas fired/oil heated lines with energy efficient microwave heated lines.

Fibrous material or Yarn

The yarn may be a spun yarn, drawn filament, multifilament or bulked continuous yarn. The yarn may be textured and may be finished.

The yarn or fibrous material may be any suitable yarn or fibrous material employed in the floor coverings. Such fibrous materials and yarns may include synthetic, natural or a combination of synthetic and natural fibre, such as but not limited to polyamides like nylon, olefins like polypropylene, wool and wool blends, cotton, acrylic, acrylic-nylon blends, polyester yarns and combinations and blends thereof. The yarns/fibrous materials may be used to form face or back yarn with the primary backing.

In one embodiment, the yarn is formed from a biobased fibre. For example, a biobased polyhexamethylene sebacamide polymer. One suitable polymer is Ultramid Balance 6, 10 available from BASF. This material is a polyamide 6, 10 based on over 60% on sebacic acid derived from castor oil, which is itself a renewable resource obtained from the seeds of *Ricinus Communis.* Suitably the polymer is 63% biobased. In one embodiment the biobased polyhexamethylene sebacamide polymer is blended with up to 80wt% of at least one polymer compatible with the biobased polyhexamethylene sebacamide polymer. Suitable polymers for blending with the biobased polyhexamethylene sebacamide polymer include, but are not limited to nylon 6,6 or nylon 6,12.

Other optional additives which may be added to the yarn/fibrous material include, but are not limited to, one or more of antistatics, antioxidants, antimicrobials, flameproofing agents, colourants, delustering agents, stabilisers, stain blockers and lubricants.

The colourant may be any suitable pigment and may be chosen from organic and/or inorganic classes. In one embodiment the pigment is at least one pigment chosen from among: quinacridone magenta PR202, perylene red PR178, iron oxide red PR101, zinc iron yellow PY119, nickel azo yellow PY150, phthalocyanine green PG7, phthalocyanine blue PB15:1, titanium dioxide PW6 and carbon black PBIk7. The range of colourant to be added is typically bounded by a functional minimum below which appearance or lightfastness is unsuitable or a functional maximum at which chromatic saturation is achieved. While different for each of the aforenamed inorganic and organic colourants, a typical minimum of 0.05wt% and a typical maximum of 2.5wt% may be encountered.

Primary backing layer

The primary backing may be a tufted fibrous layer or a fusion bonded material. When a tufted fibrous layer is used, it may be prepared by feeding the primary backing material to a conventional tufting machine which tufts fibres through interstices in the material. Tufting is typically performed such the resulting tufts protrude from the underside face with back stitches which hold the tufts in place on the topside of the material during processing.

The primary backing is suitably formed from a woven or non-woven synthetic or non-synthetic fibre. Suitably a thermoplastic backing such as a woven polypropylene backing or a non-woven polyester, with a fibrous face or wear surface such as a tufted face, and a fibrous back surface, such as a loop or tufted surface where the carpet tile is tufted is used. A polyester such as Lutradur® is preferably used when making a PVC backed floor covering because it does not suffer too much from shrinkage due to heat during the gelling process thus minimizing the risk of tile uplift due to not enough drape. Other suitable backings include Nylon®, fibreglass, cotton, jute, rayon, paper, natural or synthetic rubbers, sponge or foam rubbers, polychloroprene, acrylonitrile-butadiene copolymers, ethylene-propylene-diene rubbers, petroleum resin, vinyl polymers (such as polyvinylchloride, polyvinylidene chloride, polyvinyl acetate, polyvinyl acetal, polyvinyl butyral, copolymers or mixtures thereof), polybutene resin, polyisobutene-butadiene resins and copolymers and mixtures thereof.

For a fusion bonded carpet tile, the fibrous material and yarns employed in the carpet tile are implanted into a material such as PVC or a hot melt adhesive which may be laminated to a substrate such as a woven or nonwoven material such as fibreglass, Nylon®, polypropylene or polyester.

Precoat

The primary backing layer may be precoated with latex or with another suitable precoating composition of the invention prior to applying a backing layer. Typically the precoat is applied to cover the loop backs and to lock in the loops.

The latex may be an EVA latex or another vinyl polymer or acrylic-like polymer latex. For example, the latex may be a copolymer of acrylic and methacrylic acid and alkyl acrylates and esters (such as ethyl acrylate or methyl acrylate), acrylic-styrene copolymers, acrylonitrile-styrene copolymers, vinylidene chloride-acrylonitrile copolymers, and combinations thereof. Suitably the latex is non-halogenated. Other suitable latex materials which can be used include other vinyl, short-chain carboxylic acid copolymers, butadiene-acrylonitrile copolymer, styrene-butadiene, carboxylated styrene-butadiene, carboxylated styrene-butadiene-styrene. Urethane, PVC, acrylics or vinylidine chloride may also be used.

The precoating composition/latex may further comprise a thickener, an antibacterial, a fire retardant and/or a surfactant. A suitable antibacterial is zinc omadine - zinc-2-pyridinethiol-1-oxide. A suitable fire retardant is aluminium hydroxide. A suitable surfactant is sodium lauryl sulphate.

In one embodiment a precoating composition is used comprising: at least one copolymer derived from an acrylic or methacrylic monomer and a styrenic monomer; at least one copolymer derived from an acrylic ester and a methacrylic ester; at least one thickener; and water. The copolymer derived from an acrylic or methacrylic monomer and a styrenic monomer is suitably an acrylate/styrene copolymer dispersion such as that supplied by BASF Corporation as Acronal® S 728 na. Acronal® S 728 na is a butyl acrylate/styrene copolymer dispersion and contains water in an amount of 49 to 51%w/w and a proprietory copolymer in an amount of about 49 to 51%w/w. The dispersion has a flash point greater than 300°F (149°C), a milky white with a faint ester-like odour, a pH of about 6.5 to 7.5, a boiling point of 212°C (760mmHg), a vapour pressure of 23 mbar (20°C), a relative density of 1.04 (20°C), a viscosity of 200 to 700mPa.s and is miscible in water. This copolymer is traditionally used for coating in the paper industry but to date has not been used in the preparation of carpet tiles. Prior to addition to the precoating composition, the copolymer is suitably diluted to 25% solids with water. As indicated above the precoating composition may also contain a copolymer derived from an acrylic ester and a methacrylic ester. This copolymer facilitates the acrylic styrene sticking to thermoplastic materials such as PVC suitably used in the manufacture of the floor coverings. A suitable polymer is Acronal® AX 8281 AP available from BASF Aktiengesellschaft. This dispersion is white in colour with faint odour and a pH value of 7 to 8, a density of about 1.02 $g/cm^3$ at 20°C, a dynamic viscosity of 300 to 1500mPa.s (23°C) and a solids content of 48.5 to 51.5%. The polymeric dispersion is miscible in water. This acrylic addition raises the glass temperature in the aqueous solution. If used alone this acrylic resin is very brittle. Inclusion together with the acrylate/styrene copolymer allows the composition to stick/lock to the backing layer. Suitably about 20% dry weight of Acronal® is added (16% volume). The precoating composition suitably contains a thickener. Suitably the thickener is a thickener suitable for polymer dispersions, for example, an acrylic copolymer containing carboxyl groups. A suitable thickener is Latekoll® D available from BASF Aktiengesellschaft and is a low-viscosity, milky white anionic dispersion. Latekoll® D has a solids content (ISO 1625) of about $25 \pm 1$ %, a pH value of 2.3 to 3.3, a viscosity at 23°C, shear rate 250 s$^{-1}$ of 2-10mPa.s and a density at 20°C of about 1.05g/cm$^3$. The thickener helps to prevent the precoating composition from wicking down holes in the primary backing layer. The thickener is suitably pre-diluted with water to form a homogeneous solution prior to the addition to the resins.

The precoating composition described above can be prepared by first mixing the copolymer derived from an acrylic or methacrylic monomer and a styrenic monomer and the copolymer derived from an acrylic ester and a methacrylic ester followed by addition of the thickener which has been pre-diluted with water, followed by addition of additional water. About 20% (of the dry weight of S728) of the AX8281 Acronal® is suitably added to the Acronal® S728 and suitably 1 to 2wt% (up to 5%) of thickener added. It is important not to add too much thickener as strike through of the primary backing may occur. It is also important not add thickener to the base material followed by addition of water as the composition may overthicken locally. It is also important not to add the water/thickener solution too quickly to the Acronal® as this will result in curdling and an ineffective solution. The amount of AX8281 can range from 10% of the dry weight of S728 up to 40%, for example 20 to 35%. When present, the antibacterial, fire retardant and surfactant may be added at the end of the mixing cycle after the addition of water and thickener.

Application of the latex/precoating composition when present to the primary backing layer

The latex/precoating composition can be applied to the primary backing by roller coating, spraying or by foaming. The amount of latex/precoating used for a 850g/m$^2$ carpet can be up to 100g/m$^2$. The latex/precoating composition serves to lock in the fibre on the back of the primary, such as a tufted back layer and acts as a barrier, separating the fibrous carpet from the underlying backing. The pre-coating is suitably heated to drive off sufficient water to provide a solid barrier and to allow for possible cross-linking.

The precoating layer has a thickness which is typically quite thin. Suitably the thickness is about 0.005mm to 0.1mm when dry. The thickness is suitably controlled by the use of spray nozzles and spray pressure. The precoating layer is suitably placed directly on and against the back surface of the loop or fibre containing primary backing and is applied in an amount to cover completely the loop backs and to lock in loops so that no mountains or valleys are evident. During processing the copolymers are cured and crosslinked. The resulting precoated product is very flexible.

Backing layer

The floor covering includes a thermoplastic backing layer which imparts stability and free-laying properties to the floor covering.

Prior to applying the backing layer, it is possible to shear the carpet fibres if desired. Shearing is performed to cut the closed loop, tufted yarn on the face surface and to provide for the cut, tufted yarn to have the same general height as the height of the face wear surface fibres.

The backing layer is formed from one or more layers of a thermoplastic polymer curable with microwaves. The thermoplastic is a vinyl halide. The vinyl halide is PVC (polyvinylchloride). Other suitable backings include atactic polypropylene, polyolefin, ethylene vinyl acetate copolymer, thermoplastic elastomers, polyurethanes, PVC/Latex, polyurethane, polyamines, urethane, polyvinylidine chloride, polyvinyl acetate, polyvinyl butyral, natural or synthetic rubber or polychloroprene. The backing layer may be in the form of a foam, sponge or solid. When in the form of a foam, the backing layer adds resilence and/or stability. The backing layer can have a range of properties depending on the nature of polymers, plasticizers, stabilizers and fillers used.

Generally about 2.88kg/m$^2$ of PVC is required to make carpet. When using the optional precoating composition of the present invention, whilst it is possible to still use 2.88kg/m$^2$, it is desired to reduce the amount of PVC to about 1kg to 2kg/m$^2$, with 1.5kg to 1.6kg/m$^2$ being particularly suitable and still retain the flexibility.

Backing composition according to one embodiment of the invention

In one embodiment the backing is formed from a composition including a plasticizer together with a thermoplastic PVC polymer. A filler may also be included. In one embodiment of the invention, there is provided the use of recycled glass as filler in a PVC plastisol for the manufacture of a carpet tile. In one embodiment a composition for preparing a floor covering is used comprising: a thermoplastic resin; a plasticizer which is a mixture of an epoxidized soybean oil with an acetic acid ester of castor oil, and a filler. In another embodiment a composition for preparing a floor covering is used comprising: a thermoplastic resin; at least one plasticizer; and recycled glass.

The filler may be limestone or recycled glass or a combination of both recycled glass and limestone in any ratio of both. In a particularly preferred embodiment the filler is recycled glass. As the glass that may be used has a specific gravity of 2.0 to 2.5 and limestone a specific gravity of 2.7, less volume of glass is required than that of limestone. For example for 1357 kg of PVC paste, about 825kg of limestone filler is required whereas only 611kg of recycled glass is required.

The recycled glass fibres suitably have a particle size smaller than sand grains and are prepared by use of a ball mill so that they are round glass particles. They are typically an inert byproduct (consumer waste) and do not absorb any of the plasticizer oil whereas limestone when used may absorb about 17wt% plasticizer oil.

The recycled glass may be Enviro-glass available from Recycled Glass Mediums Australia Pty Ltd of 95 Wisemans Ferry Road Somersby NSW 2250, Australia and available in particle size ranges less than 0.106mm up to 10mm, for example 2.5mm to 1.5mm, 1.5mm to 0.75mm, 0.75mm to 0.3mm and 0.3mm to 0.106mm.

In one embodiment a 300$\mu$m or less fine is used with preference for a fine having a majority of particles of less than 200 microns.

The product may be crushed glass - colourless, blue, mixed amber, mixed green, may be odourless, inorganic solid, ground and graded glass having a melting point above 800°C, a specific gravity of about 2.5 (this value is generic, the measured specific gravity of the product may be 2) and is typically insoluble in water.

The recycled glass may contain soda lime silica glass of the following chemical composition:

| | |
|---|---|
| $Na_2O + K_2O + Li_2O$ | 12-15% |
| $CaO + MgO$ | 10-13% |
| $Al_2O_3$ | 1-2% |
| Other oxides (except $SiO_2$) | 0-1% |
| Bound silica | balance (contains no free silica). |

About 40 to 70wt% of the recycled glass may be used with respect to the total mix of plastisol. Suitably 50 to 61wt% is used.

The plasticizer may be a standard phthalate plasticizer such as DINP, DEHP, OOP, PEG 100, or PEG 200

A particularly preferred plasticizer is the combination of epoxide soy bean oil and a castor oil derivative. In view of the fact that the epoxidised soy bean oil winters (i.e. at low temperatures the oil solidifies), it is difficult to get the required viscosity and consequently when used alone, suffers from plastic migration. Epoxide soy bean oil also does not have a long shelf life. The castor oil derivative results in good viscosity and avoids uptake and migration of the soy bean oil. A suitable composition includes 30% castor oil and 70% soybean oil. A suitable range of plasticizer is 40 to 20wt% castor oil and 60 to 80wt% soybean oil. A viscosity modifier such as an alcohol may be present as required to lower viscosity. A suitable viscosity modifier is ethanol. In one embodiment 5 to 10wt% ethanol may be present.

The combination of epoxidised soy bean oil and a castor oil derivative acts synergistically. Suitably the combination is mixed at room temperature.

A suitable soy bean plasticizer is an epoxidised soya bean oil such as Lankroflex E2307 (ESBO) AG available from Swift and Company Limited, 372 Wellington Road, Mulgrave, Victoria 3170, Australia. Lankroflex E2307 is a low odour epoxy plasticizer containing pure epoxidised soya bean oil and having an oxirane oxygen content of 6.6% min, an iodine value of 2.5 max, a viscosity (30°C) of 350 c-Poise max., an acid value of 0.4 KOH mg/g max., a moisture content of 0.1% max., a specific gravity (25°C) of 0.992 $\pm$ 0.01, a refractive index (25°C) of 1.470 $\pm$ 0.002 and a colour - 120 APHA max. Lankroflex E2307 is a clear, yellow, oily liquid having a faint fatty odour and is a liquid at normal temperatures. The product has a boiling point above 200°C at 100kPa and a flashpoint of about 314°C, a specific gravity of 0.99 at 25°C, insoluble in water and a viscosity of 350 centipoise at 25°C.

The castor oil derivative is suitably an acetic acid ester of monoglycerides made from fully hydrogenated castor oil such as Grindsted® Soft-n-Safe/C available from Danisco Emulsifiers. The product has a degree of acetylation of about 0.9, an iodine value of 4 max, an acid value of 3 max, a saponification value of about 435 and is in the form of a clear liquid. The product contains octadecanoic acid, 12-(acetyioxy), bis(acetyloxy)propyl ester (about 85%) and octadecanoic acid, 2,3-bis(acetyloxy)propyl ester (about 10%). The product is a liquid at room temperature and is insoluble in water, decomposes above 300°C, and has a flash point above 100°C, a neutral odour, a density of 1.0030 g/ml at 20°C and a vapour pressure of 1.05 x $10^{-4}$ Torr at 123.6°C.

A preferred backing layer is formed from a composition comprising recycled glass and the soy bean oil/castor oil combination. This result is a more renewable and less fossil based product. In such a combination the composition may include up to about 60% thermoplastic (fossil origin).

Optional additives and layers

The primary backing and backing layer or latex/precoating composition may include any one or more of flame or fire retardants, inert fillers such as limestone or barytes, calcium oxide, carbon-black, antibacterial, surfactants, defoamers, thickeners, dispersing agents, elastomers, antioxidants, colourants, hardeners, plasticizers, UV/heat stabilizers, viscosity modifiers, cross-linking agents and/or tackifiers.

The use of a plasticizer in combination with the thermoplastic resin provides the required flexibility, durability and hardness. The presence of a heat stabilizer stabilizes the thermoplastic and prevents thermal decomposition, a UV stabilizer stabilizes the thermoplastic preventing decomposition as a result of exposure to UV light, calcium oxide ensures any moisture is removed from the mixing process, calcium carbonate (limestone) acts as filler, increasing the volume of the thermoplastic compound mix at reduced cost and a viscosity modifier maintains viscosity to ensure that the mix remains well mixed and in suspension (slowing the dropping out of solids).

The floor covering may include one or more woven or non-woven layers of glass, fibreglass, polyester, Nylon® or polypropylene such as tissue, mesh or fleece or scrim sheet materials or a combination thereof in the primary backing and backing layer. The scrim material may be employed adjacent to the primary backing or closely adjacent thereto. Glass fibre or tissue materials may be employed within the thermoplastic backing layer to impart dimensional stability and improve laying properties of the carpet tile. Cushion layers for example, formed of foam may also be included.

The underside of the backing layer may be provided with an adhesive with a strippable protective layer attached thereto, where, in use the protective layer is stripped off and the floor covering applied to the floor surface or applied with a pressure sensitive adhesive.

Application of the backing layer and preparation of the carpet tile

The floor covering may be prepared in any suitable manner. For example, a layer of thermoplastic may be applied/cast in a defined thickness onto the underside of the primary backing layer (optionally including a precoat)) as a wet plastisol. The coated material is leveled with a doctor blade which levels and smooths the thermoplastic layer and forces the thermoplastic layer into engagement with any glass scrim and the primary backing.

Alternatively, the backing layer may be preformed on a microwave transparent releasable support such as a fluorocarbon, glass fibre endless belt or Teflon® coated fibreglass belt through casting. The primary backing layer (optionally including a cured precoat) is then laid into the liquid/paste backing layer.

Following application of the backing layer, the carpet is heated to fuse/gel and cure the thermoplastic, cooled and optionally cut into carpet tile sections. Heating is by way of microwave energy whereby electromagnetic waves are used to heat and cure the thermoplastic. The heating cures the thermoplastic material and for a tufted carpet, thereby locks back stitches in place, the primary backing is thereby bonded to the backing layer by fibres of the primary backing being embedded in the backing layer. The carpet tile may be heated to a curing temperature within the range of 50°C to 175°C, for example 90°C to 170°C, 90°C to 160°C, 100°C to 150°C or 140°C to 150°C. For example for PVC, the plasticizer melts and begins diffusing into particles at 50°C, gelation begins at about 50°C and continues to about 130°C, at which point the particles swell, between 130°C and 170°C the gelation stage ends. At 91°C the polymer flows into a continuous mass.

A suitable apparatus for heating/gelling the backing layer includes,

at least one microwave generator for generating microwaves;

at least one single pass or multipass slotted waveguide applicator, and

means for forwarding a carpet having an uncured thermoplastic backing provided thereon into the waveguide applicator.

The apparatus is suitably housed in a chamber. The primary backing and backing layers are suitably passed into the chamber to be heated by microwaves in the waveguide applicator to provide for plastic deformation of the backing layer. A pair of press rollers is provided to which the primary backing, backing and any additional cushion layers are delivered, after the primary and backing layers have been heated by the microwaves, to apply a force thereto to cause the layers to bond. A controller may be operatively associated with the microwave generator, the controller being configured to maintain the temperature within the chamber to provide for heating of the backing layer so that the backing layer is relatively deformed by the rollers to bond the layers.

A split or resonator slotted waveguide may be used. Alternatively a serpentine (meandering) travelling wave applicator may be used. A serpentine applicator is basically a series of slotted waveguide applicators connected by 180°C bends. By use of such an applicator, each pass has a highly uniform E-field and relatively low attenuation resulting in uniform heating.

Suitable waveguides are made from aluminium, the microwaves travelling though the waveguide with internal reflection. The width of the slot may be varied as required. As a microwave generator, suitably a 922MHz magnetron is used, although a 2.45GHz magnetron may also be used. Chokes, sinks, water loads and dummy loads are suitably provided to trap excess microwaves and prevent leakage.

The carpet is suitably fed into the chamber and into the waveguide applicator via a microwave transparent conveyor.

A number of heating zones may be provided in the chamber, for example, - a first zone where paste is applied and the primary backing laid into the paste (for example at approximately 33°C) and a second zone where cure occurs (for example approximately 170°C). Probes may be provided to determine the surface temperature in each zone. A third cooling zone may also be provided. In this cooling zone (for example at about 105°C), the carpet tile may be removed from the conveyor.

By use of microwaves, it is possible to cure the backing layer in three minutes or less. In one embodiment it is possible to cure the backing layer in 20 seconds or less.

During gelling or after gelling the carpet may be passed under an embossing roller which embosses the back of the carpet with indentations, corrugations or the like to form a friction-increasing surface (resisting movement and maintaining position when placed in situ) and assists in consolidating the layers into a unitary product. The consolidated carpet material may then be severed by suitable cutting means into appropriate length sections (for example into squares). The laminated construction may be cooled for example to about 105°C to allow removal of the construction from the support The construction may then be passed through a heater and raised to about 100°C prior to being engaged by an embossing roller that embosses the thermoplastic layer.

In one embodiment, the backing layer is formed of a layer of PVC thermoplastic, a fibreglass scrim and a second PVC thermoplastic layer. The first layer of thermoplastic bonds the primary backing to the fibreglass layer, the thickness of the layer suitably being controlled by a doctor blade. The fibreglass layer is to ensure dimensional stability of the carpet tile. The second layer of thermoplastic glues the layers above it and provides the final backing of the carpet tile. The thickness of this layer is also suitably controlled by a doctor blade.

The backing layer may be applied to the primary backing in a continuous fashion to produce an indeterminate length of material which may be subsequently cut as desired to form the carpet tile,

The thickness of each layer may vary depending on whether a solid layer or foam layer is used. For example, the first PVC layer range is dependant on the weight of the PVC backing i.e., $2.64kg/m^2$ would be two layers of 0.88mm, $2kg/m^2$ would be two layers at 0.67mm, while $1.5kg/m^2$ would be two layers at 0.5mm. The overall carpet thickness may suitably be between about 4 and 12 mm, for example about 6mm without foam backing and about 10mm with foam backing.

Application

The resulting floor covering is suitable for use as a floor covering in home and/or commercial use. Pressure sensitive adhesives may be required for installation and where floor tiles are prepared, the floor tiles can be replaced or rotated as desired.

By use of microwave curing, the production time is shortened and costs minimised. There is a reduction in the total energy used.

The present invention provides a viable microwave carpet web processing method which is conducted continuously for the rapid curing of thermoplastic PVC backings. High energy efficiencies can be achieved over present curing methods.

The following Examples show preferred embodiments of the invention but should not be construed as limiting on the invention. The Examples show that rapid curing of raw/uncured PVC using microwaves is possible and is energy efficient with results showing a possible 8&-87% reduction in energy per square metre used during the PVC curing phase over actual energy used in existing carpet processing lines. The ability to instantaneously control the power of the microwave unit and the rapid start-up and shut down times may also result in zero wasted energy for "pre-heat" time, and the nature of the heat application results in minimal thermal heat loss. Because the microwave technology is supplied by electricity instead of natural gas/heated oil, an objective is met to find alternatives to use of non-renewable natural gas.

**Examples**

The dielectric properties ($\varepsilon$) of any material is one of the main parameters that influences how microwave energy is coupled into the material and how efficiently this energy is converted into thermal energy. These properties are represented by the following equation:

$$\varepsilon = \varepsilon' - j\varepsilon''$$

where $\varepsilon'$, the dielectric constant, represents the ability of the material to store energy when a microwave field in applied, and $\varepsilon''$ represents the loss factor and determines how readily the microwave energy is converted into heat within the material.

When materials are subjected to electromagnetic fields, there are various mechanisms which provide energy storage and conversion to heat. Ionic conduction and dipole rotation are the two dominant mechanisms of heating for a solution.

Typically as material heats, the dielectric loss factor increases. This can lead to an effect known as thermal runaway (where hotter parts of the workload are heated preferentially) which promotes non-uniform heating. The increase in the dielectric loss factor can also be an advantage. If the temperature of a material can be increased to a suitable level (for example, by using a preheating step using conventional means or by including an additive which has a higher dielectric loss factor), microwave heating can be used to bring the product up the final required temperature. It follows that a knowledge of dielectric data is desirable in the design of any microwave heating system because it allows estimates to be made of the power density, the associated electric field stress and penetration depth in the processing material.

One of the main concerns in any microwave heating system is the penetration depth of the power flux into the workload. It gives a direct understanding of the heat distribution and hence heating uniformity. The penetration depth refers to a wave passing into a dielectric whose amplitude is diminishing due to power absorption as heat into the material. The intensity of the wave field and power flux density fall exponentially with distance from the surface. The rate of decay is a function of the complex dielectric constant $\varepsilon$ referred to above, which comprises the real component $\varepsilon'$ and the loss factor $\varepsilon''$. The penetration depth $D_P$ is defined as the depth into the material at which the power flux has fallen to 37% (1/e) of its value on the surface. The dielectric constant of the material being processed provides insight into the electromagnetic behaviour of the wave inside the material and allows the criteria for designing an appropriate apparatus to be defined.

The relationship between $D_P$ and the dielectric properties of a material can be described using the following formula for low loss dielectrics:

$$D_p \approx \frac{\lambda_0 \sqrt{\varepsilon'}}{2\pi\varepsilon''}$$

The formula shows that penetration depth is proportional to the wavelength of the incident microwave energy, thus higher frequencies will achieve lower penetration into the workload given the dielectric properties are similar at both frequencies.

As penetration depth only refers to the distance into the material where the power flux density has decreased to 37% of its surface value, the corresponding temperature will be directly related to the exponential decay in power the deeper into the material.

In the following examples, tests were undertaken to assess the suitability of using microwaves to cure PVC paste or carpet crumb on a continuous basis. The trials included static trials of PVC and carpet crumb, low power trials (to find the microwave properties of the PVC), software modelling (computer simulation using the microwave properties suggested that a meander style applicator suitably with ridges (triangular, rectangular chamfered) would be the optimum option design), physical modelling (after fabrication and testing a meander system without ridges was found to be the best option from a practical point of view), high power trials (using a high power microwave generator) and analysing the results of the high power testing to determine suitable design criteria and determine a conceptual design for a full size plant to cure PVC in a carpet production capability.

## EXAMPLE 1

A series of experimental trails were undertaken to ascertain the feasibility of using microwaves as a heat source to process PVC and carpet crumb. Tests were carried out in a variety of different cavities at different frequencies in order to gain a thorough understanding of the product and possible Issues associated with the heating. Each experiment involved the heating of PVC or a carpet crumb sample using microwaves at 922 MHz or 2.45 GHz applicator (the standard microwave frequencies available in Australia) using single mode and multimode at different power levels, including the addition of various additives to the carpet crumb (such as water, high dielectric additives and plasticisers) to aid heating, the use of pressure and heating for different times. In this regard, 2.45GHz applicators are typically used for low power systems and domestic ovens. 922MHZ up to 100kW applicators are high power and mainly used for industrial applications.

Multiple applicators were trialled to test different scenarios to determine which option would provide the best chance of success. Some success was achieved when the crumb was held between microwave absorbing material however this form of indirect hearing is similar to conventional heating and far too slow and inefficient.

In the Experiments the carpet crumb or PVC (the load) were placed in the applicator sandwiched between two pieces of material with a low dielectric loss factor, such as Teflon® or mica. This allowed pressure to be distributed evenly over the whole load if required and also allowed insulation to be placed on either side of the sample being processed to reduce heat loss to the surroundings.

Carpet crumb is made up of 25% PVC and 75% calcium carbonate. PVC and calcium carbonate have different dielectric properties and accordingly are heated at different rates by microwaves. The dielectric loss factors for the materials at 20°C are: PVC = 0.025 and $CaCO_3$ = 0.0001. The loss factor for PVC increases up to 80°C and then decreases as the temperature approaches 100°C. Together with the very low loss factor for calcium carbonate theoretically makes heating via microwaves very difficult.

Experimental results and dielectric data clearly show that whilst PVC is readily cured using both 922MHz and 2.45GHz generators (within 20 seconds using a 30kW 922 MHz generator) carpet crumb (recycled ground back of a carpet tile) is difficult to cure using microwave energy with hot spots being formed in the heated product The tests show that there are difficulties to be overcome in order to use microwave heating to process carpet crumb. In a 922MHz oven, the carpet crumb is very hard to heat. In a 2.45GHz, heating is easier but it is also quite easy to heat small areas resulting in burning of the product. A product with a high dielectric loss factor can assist the heating of the crumb in a 922MHz system however a significant amount of energy is still required to achieve modest temperature rises. Thermal runaway is also a concern.

With PVC initial testing was done using a 1kW, 2.45GHz microwave and continued with further testing with a 30kW 922MHz generator. These were static tests using uncured PVC plastisol with time and temperature measurements made after each minute of processing. The initial test results are shown below.

**Table 1 - Temperature Rise per Minute Processing Time for Raw PVC**

| Processing Time (min) | Temperature (°C) |
|---|---|
| 0 | 27 |
| 1 | 40-45 |
| 2 | 51-56 |
| 3 | 53-65 (Part cured) |

It can be seen that some of the product was cured after 3 minutes and the measured temperature was about 65°C.

The next test comprised processing continuously for 3 minutes in the 2.45GHz cavity. After this heating time most of the product was cured and was at a temperature of about 74°C. There was a small uncured section about 40mm diameter in the centre of the sample.

For the next test a 922MHz generator was used to determine how quickly the product could be processed. Various orientations were tested to find the most suitable. Initially the PVC layer was tangent to the highest E-field, parallel to the broad face of the waveguide. This resulted in a curing time of 70 seconds. The orientation was then changed so the PVC layer was parallel and in line with the highest E-field plane (parallel to the narrow face of the waveguide). A thicker sample of PVC was also used (about 5 to 6mm). This drastically reduced the heating time required. The shortest time achieved was 20 seconds but this time is likely to be further reduced by the design of a suitable applicator/waveguide.

These tests show that it is possible to cure PVC quickly using microwaves as a heating source. The cured PVC is almost transparent to microwave energy.

The following are some general conclusions that may be derived from the dielectric values of PVC in designing a system for curing carpet plastisol:

- For a given electric field E the absorption of energy depends on $\varepsilon''$. The effectiveness of heating will depend as much on the design of the applicator (oven) as on the loss factor of the material.
- The above equation shows that penetration depth is greatly affected by frequency (or wavelength $\lambda_0$). Generally penetration depth at 2.45GHz is approximately 30% of that at 922 MHz due mainly due to the frequency effect.
- The choice of frequency is basically between using multiple magnetrons operating at either 2.45GHz maximum rated power 30kW or larger power magnetrons operating at 922MHz rated maximum power 100kW. Some facts about each approach are listed below:
- Magnetron efficiencies are between 50-70% for 2.45GHz compared to 80-87% for high power 922MHz.

- Applicator dimensions and complexity increases as the number of individual magnetron sources increases.
- In multiple magnetron installations, magnetron life is reduced due to cross coupling of power.
- Multiple magnetron systems provide a high degree of redundancy.
- Penetration depths are significantly larger at 922 MHz than at 2.45 GHz.
- Waveguide sizes for 2.45 GHz are significantly smaller than that for 922 MHz. The larger size makes it easier to use single mode cavities as they are physically bigger.
- Suitably a frequency of 922 MHz is chosen. The main reason for this choice is a higher maximum power of 100kW, a higher penetration depth resulting in more even heating and a larger waveguide size.
- An issue with microwave heating is non-uniform field strength over the product and accordingly it is necessary to give careful attention to minimise standing waves and edge effects and boundary field distortions caused by attenuation by absorption of the microwave power over the length of the product. In this regard each unit length of product absorbs a certain amount of power which means there is less power and therefore a weaker E-field for the next unit length. It follows that care should be taken when selecting process variables such as slot length, power levels, use of split or resonant applicators, to ensure the variation in E-field strength over the width of the product is reduced.
- A single pass with low attenuation is not very efficient as most of the power is wasted. To overcome this, several slotted waveguide applicators in series may be used, each applicator using the remaining power from the previous applicator. In this way most of the power can be absorbed after multiple passes resulting in a high total percentage of absorption.
- Small discrete products may be fed through the waveguide parallel to the direction of microwave propagation whereas larger webs can be fed through slots in the broad faces of the waveguide perpendicular to the direction of propagation. Small discrete objects are more likely to be affected by boundary field distortions because there is a higher boundary to material ratio than in the case of a continuous product. Field distortions give rise to increased heating at the ends of objects and if left unchecked can cause damage to the product through overheating. This issue may be overcome by introducing an axial component to the E-field by adding corrugations to the broad face of the waveguide. Larger webs heated via a slotted waveguide are more likely to be affected by uneven field strength caused by the attenuation of the microwave power by the product.
- If the variation in E-field strength over the width of the product can be reduced, more even heating can be achieved. A single pass with low attenuation is not very efficient as most of the power is wasted and any possible increase in temperature is severely limited. To overcome this, several slotted waveguide applicators in series may be used, each applicator using the remaining power from the previous applicator. In this way most of the power can be absorbed after multiple passes resulting in a high total percentage of absorption. The main method to achieve this is to use a serpentine (or meandering) traveling wave applicator. A serpentine applicator is a series of slotted waveguide applicators connected via 180° bends. Each pass has a high uniformity of the E-field due to a relatively low attenuation which results in uniformity of heating.
- Care should also be taken to minimise leakage from the slots provided in the centre of the broad face of the waveguide which are inherently non-radiating due to their placement in relation to the flow of current on the waveguide wall but which may disturb the E-field and wall currents.

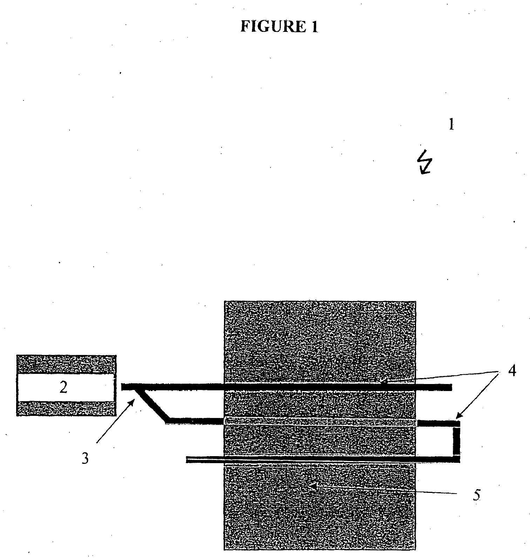

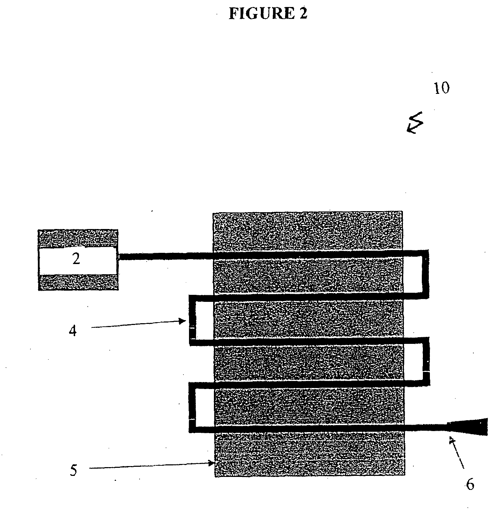

Two designs of suitable apparatus for microwave treatment of raw PVC and carpet plastisol are shown in Figures 1 and 2. Both designs involve the equipment being specifically designed to suit the application. In Figure 1 the microwave system requires two slotted waveguides with energy feeding into each side of the web being processed via a power splitter. The second case requires a slotted waveguide that meanders across the PVC web to achieve a number of passes. In this case the applicator is continuous so only two choke sections are required.

With reference to Figure 1, the apparatus comprises a microwave generator (2), a single mode travelling wave applicator (4) and a water load (6, see Figure 2). The components are suitably provided in series. Additional items which may be included but not shown include a circulator, directional coupler and/or a tuner. A means for forwarding a carpet having an uncured thermoplastic backing provided thereon into the waveguide applicator is also provided (but not shown in the drawing).

The generator contains the power supply, magnetron and wave guide launcher and provides microwave power output levels of typically between 5 to 30 kW at a frequency of 922MHz. Power is transmitted through the waveguide (suitably a hollow rectangular tubing) to the water load. The microwave power used will depend on the product. Process variables such as heating rate and final temperature are best controlled by varying the microwave power. The generator houses most of the control devices associated with the system.

The single mode travelling wave applicator was chosen because it gives a stable E-field with the maximum field strength in the centre of the broad face. In theory by aligning the sample to be heated with this maximum E-field running the length of the cavity, even heating can be achieved. In the Figure, the single mode travelling wave applicator includes two slotted waveguides with energy fed into each side of the PVC web (5) being processed via a power splitter (3). A microwave power splitter is suitably used to achieve even heating and an even power profile across the whole web.

The gap associated with the microwave slot is suitably no larger than 35mm, more suitably no more than 30mm, otherwise radiated emissions will require significant choking.

The water load or dummy load is specifically designed to absorb large amounts of power in a microwave heating system. A water load is used for two reasons: (i) to absorb any remaining power after the product has been heated and (ii) to prevent the formation of a standing wave formed by the reflection of the microwaves off the back wall of the applicator. In single mode applicators, a standing wave can be created by short circuiting the applicator. A short circuit is something which completely blocks the propagation of microwaves, causing the power to be reflected. This is undesirable as a standing wave introduces a significant level of unevenness in the E-field strength. At the point of reflection, there is a minimum in the E-field which is repeated every ½ wavelength in the waveguide. There is also a maximum at every half wavelength starting a quarter wavelength from the reflection. This causes hot spots in the heated material.

Following the flow of power from the magnetron, a circulator may be provided which eliminates problems associated with microwave applicators that are prone to reflected energy (empty cavity condition). If the reflected energy is allowed back to the launcher, the reflected energy can be reabsorbed by the magnetron causing premature ageing and hence device failure. A circulator is therefore suitably placed directly after the magnetron. The circulator acts as a one-way valve allowing energy to pass from the magnetron to the rest of the circuit but prevents any reflected energy from being returned to the magnetron. The reflected energy is suitably directed into a dummy load (similar to a water load) and is dissipated into a constant flow of water.

The circulator is suitably followed by a directional coupler which enables the measurement of the forward and reflected powers at that point - the difference being the net power to the remaining circuit components. The directional coupler samples a portion of the power in each direction, this is then measured and the power determined from the "coupling factor".

A tuner when provided allows a wide range of varying load/applicator impedances to be matched to the microwave network. Reflected power is due to impendence mismatches and the tuner acts as a matching element allowing an impedance transformation to take place, thus reducing the reflected power and improving the net power transfer to the applicator/load. The tuner comprises variable length stubs mounted in the waveguide, which when varied affect both the series and parallel reflectance.

Suitable technical specifications include one magnetron of a certain kW operating at a 922 MHz frequency with 3 phase electrical requirements (power to be determined) and a water load.

Another suitable apparatus (10) is shown in Figure 2. In this embodiment, the waveguide of Figure 1 is replaced with a slotted waveguide that meanders across the web to achieve a number of passes. One generator source is suitably required to achieve even heating. In this case the applicator is continuous so only two choke sections are required. Suitably the waveguide is slotted at the centre of its broad faces so the PVC/thermoplastic backing layer lies in the maximum electric field which will provide excellent coupling with the microwave energy. A number of passes may be required to ensure efficient and even energy distribution. Suitably the area between waveguide runs is enclosed to reduce leakage. An advantage of this embodiment is the ability to more evenly heat the web

The applicator length is greater than that of Figure 1 so a longer conveyor system is required. The radiated emissions should be lower than for the single pass applicator of Figure 1 due to the higher level of absorbed power. In order to ensure the reflected waves and uneven heating are minimised, a water load is required at the end of the waveguide. The gap associated with the microwave slot suitably is no larger than 30mm.

Suitable technical specifications include one magnetron of a certain kW operating at a 922 MHz frequency with 3 phase electrical requirements (power to be determined) and a water load.

Each apparatus is suitably fitted with at least one microwave choke ensuring maintenance of international occupational safety limits for leakage radiation, for example to comply with Australian standard AS2772.1 - 1998 "Maximum Exposure levels - 100kHz to 300GHz" and the European Committee for Electromechanical Standardization (CENELEC) pre-standard ENV 50166-2.

In use the microwave generator provides the electromagnetic energy. Microwaves produced inside the generator are propagated along the waveguide and then into the applicator (the zone where the waveguide is in proximity with PVC/carpet plastisol). Energy entering the applicator is then absorbed by the PVC/carpet thermoplastic backing layer causing an increase in temperature and hence curing of the product.

The temperature and heating rate of the PVC/carpet can be controlled by changing the output power from the microwave generator. This can done manually while processing or can be automatically modified depending on the control scheme. The best control method is to keep the web speed constant and modify the microwave power to control variables such as final temperature and heating rate. The control method also allows varying amounts of product to be processed - if a smaller amount is required, the power can be reduced to match the load. It is possible to measure the output temperature of the product and modify the power levels automatically for a set final temperature. As outlined above, the thermoplastic backing layer is suitably fed through the applicator by a microwave transparent conveyor. The material thickness will suitably be controlled to ensure even heating, for example, by using a roller system located outside the microwave cavity.

The process is suitable for curing PVC and other materials in the carpet tile (for example nylon, polyester, cured EVA latex) do not absorb any microwaves so that once cure has occurred it is difficult to overcook or bum the carpet.
This Example shows that rapid curing of PVC/carpet plastisol can be achieved using microwaves.

**EXAMPLE 2**

The experiments conducted in Example 1 were static tests with samples of PVC inside microwave ovens and/or in experimental wave guide applicators. The challenge was to apply the method to a continuous process and design a microwave heating apparatus for curing plastisol.
A series of low power tests was conducted to determine dielectric properties of uncured PVC. Knowledge of these dielectric properties is desirable if a suitable applicator is to be designed. The easiest method to determine the dielectric properties of PVC was to calculate the rate of microwave energy absorption of the PVC, suitably using a Network Analyser. A Network Analyser produces microwaves over a set frequency range at a very low power level (the energy level is lower than that of a typical mobile phone). The Network Analyser can be set up to transmit energy through the PVC paste and the amount of energy detected by the device after it has passed the PVC is recorded. The difference in the energy levels is the energy absorbed by the uncured PVC paste.

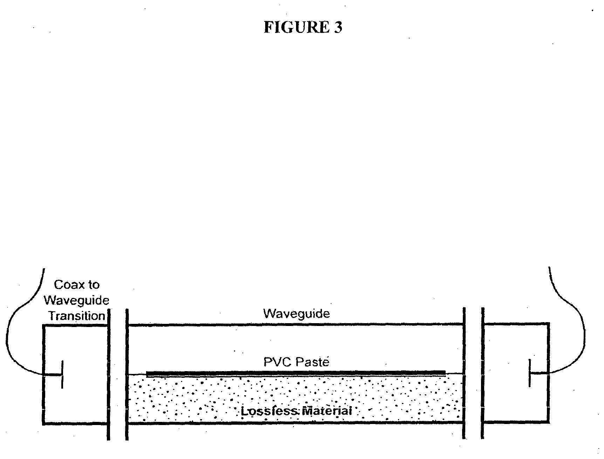

Figure 3 shows the test set up for the low power testing of the PVC paste. The highest field strength is found down the centreline of the waveguide so lossless material, which is transparent to the microwaves and not heated by them, was used to support the PVC paste in the correct location. Energy was transmitted to and from the network analyser to the applicator via coaxial cables, so coaxial to waveguide transitions are required on each end of the applicator.
The energy passed from one end of the test setup to the other and the attenuation, or reduction in energy level was recorded. This allowed the dielectric properties to be calculated so that a workable prototype could be created using computer modelling software.
The results were fed into a computer simulation/modeling program to compare various designs of the wave guide applicators (including changes to the slot dimensions and the addition of various ridges) and their effect on field pattern and absorption. From the simulation it became clear that a meandering waveguide setup (with ridges) would be the most appropriate for the curing of PVC in a continuous manner. This applicator was then designed and constructed. It was mounted on a conveyor system.
A physical model was then setup from the low power tests which had been fitted with four rectangular ridges however the results from the model did not correspond with the results from the simulation. Although the simulations indicated that there was greater field intensity when the ridges were used, the actual results did not appear agree. There was not significant increase in heating rate when ridges were used compared to empty waveguide tests.
From the simulation it became clear that a meandering waveguide setup would be the most appropriate for the curing of PVC in a continuous manner. This applicator was then designed and constructed and mounted on a conveyor system.

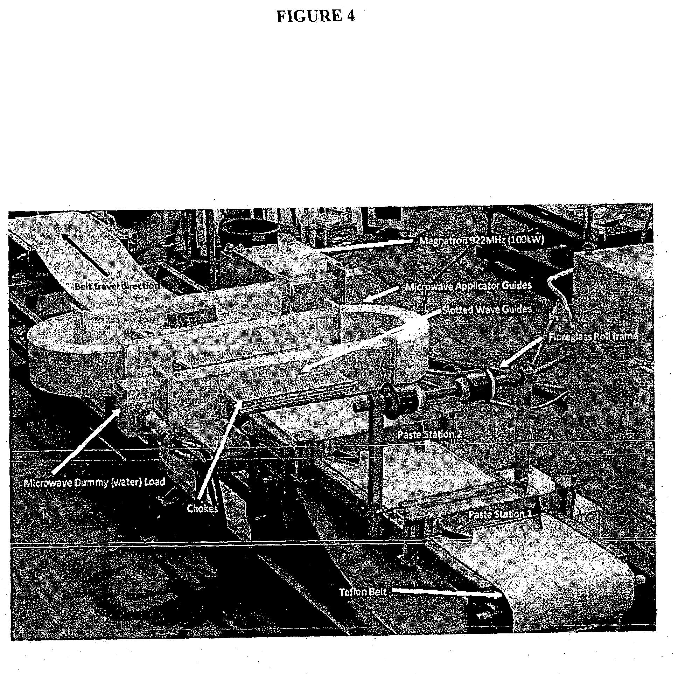

Figure 4 is a photograph of the actual apparatus used for testing. The apparatus was designed and built including an experimental 500mm wide line capable of running up to a maximum current line speed of 12 lineal metres per minute. The apparatus included a multipass (serpentine) slotted wave guide applicator to suit the attenuation of the PVC. Based on the results of the simulation, it was determined that three passes would be sufficient. Ridges were not used. Slot dimensions were determined using simulation software. From there it was a matter of sizing the chokes appropriately and then fabricating. The design was integrated with the conveyor frame with minimal modifications. PVC was applied using two spreaders shown in the bottom right of the figure. A water load, shown on the left hand end of the bottom most waveguide pass was used to absorb any leftover energy. The water load prevented the formation of any significant standing waves by absorbing the power remaining after the passes of the PVC. Without the water load all remaining energy would be reflected back through the applicator resulting in uneven heating. The water load was also used to calculate how much energy was absorbed by the PVC by measuring how much was passed through to the water load by measuring the temperature rise in the water.
The initial testing consisting of curing a single 1mm thickness of PVC and a second run using 2mm of PVC with fibreglass web in the centre. Both tests were conducted at low belt speed, less than 1 m/min and with a microwave power level of about 20kW.
The aim of the first runs on this experimental line was to prove that one could fully cure PVC on a continuous basis and at speed. The testing was successful on both counts.
Three trial runs were run as further outlined below.
Testing on the model line started with the first run using a single layer of PVC at 0.9mm thick and 100mm wide at a line speed of 0.1metres/minute at a power setting of 20kW. The sheet produced was only partly cured. Further runs showed that the more "volume" of PVC that entered, the microwave cavity the more successful the cure.
The final run was done with first layer of PVC:

- 0.9mm then 50gm/m$^2$ fibreglass
- second layer of PVC total thickness of 1.8mm
- 500mm wide at a line speed of 0.5metres/minute
- power at 20kW.

Full cure was achieved, however it was unforseen that moisture from the fibreglass was turning to steam and condensing on the inside of the microwave cavity and was the possible cause of a large arc which tripped the microwave generator circuits and burnt the PVC. Unfortunately this prevented gathering empirical data for this test.

Testing was halted at this point as modifications were required to the waveguide applicator to remove the moisture from the wave guide cavity;

### Trial 1

| | |
|---|---|
| Linespeed | 0.1 m/min |
| Dr Blade 1 | 0.9 mm |
| Fibreglass | No |
| Dr Blade 2 | N/A |
| Paste width | 100 - 200 mm |
| Magnetron | 100kW $\times$ 20% |

Observations

- Paste applied onto the belt passed through the waveguide assembly.
- The paste increased in temperature after each pass of the wave guide.
- PVC appeared to be almost completely cured in a continuous sheet when exiting the wave guide.

### Trial 2

| | |
|---|---|
| Linespeed | 0.1 m/min |
| Dr Blade 1 | 1.8 mm |
| Fibreglass | No |
| Dr Blade 2 | N/A |
| Paste width | 400 mm |
| Magnetron | 100kW $\times$ 20% |

Observations

- Paste applied onto the belt passed through the waveguide assembly.

- The paste increased in temperature after each pass of the wave guide.

- The greater PVC mass gave a disproportional increase in energy absorption resulting in much higher temperature increase and improved curing.

- PVC appeared to be completely cured in a continuous sheet at the end of the line.

- Note that small droplets of PVC not connected, to the main sheet remained uncured,

### Trial 3

| | |
|---|---|
| Linespeed | 0.5 m/min |
| Dr Blade 1 | 0.9 mm |

(continued)

| Fibreglass | Yes |
| Dr Blade 2 | 1.8 mm |
| Paste width | 500 mm |
| Magnetron | 100kW $\times$ 20% |

Observations

- Paste applied onto the belt passed through the waveguide assembly. The paste increased in temperature after each pass of the wave guide.
- PVC appeared to be completely cured in a continuous sheet and exhibited excellent tensile properties.

The trials were successful - PVC was fully cured. The testing found that the thicker the product in the applicator, the easier it was to cure the PVC. The more PVC in the microwave cavity, the more energy could be absorbed in the same time (this is especially true in the case of PVC where only a small amount of energy is absorbed at a time). The thicker material also assisted with heat retention.

**EXAMPLE 4**

A further trial was conducted with the apparatus modified so as to remove moisture. The moisture removal system involved using hot air dryers to blow air across the width of the belt via a tube on one end of each of the passes. Hot air moved across the belt and out through the choke section thereby removing steam. The hot air also heated up the walls of the waveguide reducing the likelihood of condensation.

During the trial, data was gathered to determine how much energy was being absorbed by the PVC (the energy absorption rate) by finding a power level and belt speed which resulted in the PVC being just cured. This enabled a system to be set up at the critical point at which curing was just being accomplished (any more power is energy wasted). Once this crucial point was found, the outlet temperature of the water load was measured which enabled the calculation of the amount of energy being absorbed by the water load. This energy absorption was compared with the same value when the cavity was empty to give an accurate value of energy absorption by the PVC.

This trial was a continuous run for 30 minutes with eight step parameter changes during the run to speed and power. The following table shows the parameters for each run conducted with PVC. The product thickness was controlled by two doctor blades and consisted of two layers of PVC with a fibreglass web in the middle. Over 30 lineal metres of cured PVC was made which demonstrates that the process is viable.

**Table 2 - Parameters of each run**

| Run | Belt Speed (m/min) | PVC Width (m) | Product Thickness (mm) |
|-----|--------------------|---------------|------------------------|
| 1 | 0.5 | 0.49 | 1.9 |
| 2 | 0.8 | 0.49 | 1.9 |
| 3 | 0.6 | 0.49 | 1.9 |
| 4 | 0.7 | 0.51 | 1.9 |
| 5 | 0.7 | 0.51 | 1.9 |
| 6 | 1 | 0.51 | 1.9 |
| 7 | 1.1 | 0.50 | 1.9 |
| 8 | 1.1 | 0.50 | 1.9 |

The energy absorption rate was determined by calculating the amount of power absorbed by the PVC along with belt speed.

**Table 3 - Power Absorption of PVC**

| Run | Net Delivered Power (kW) | △T Water Load (°C) | Water Load Absorption (kW) | Power into Product (kW) |
|---|---|---|---|---|
| 1 | 12.7 | 8.7 | 10.0 | 2.7 |
| 2 | 12.7 | 9.2 | 10.6 | 2.1 |
| 3 | 14.2 | 9 | 10.3 | 3.9 |
| 4 | 14.2 | 8.9 | 10.2 | 4.0 |
| 5 | 16.2 | 11 | 12.6 | 3.6 |
| 6 | 16.2 | 11.2 | 12.9 | 3.3 |
| 7 | 16.0 | 11 | 12.6 | 3.4 |
| 8 | 17.4 | 12 | 13.8 | 3.7 |

From the table it can be seen that the power required to cure the PVC was low compared to the output power. Most of the power was passing across the PVC and being absorbed by the water load at the end of the system. This low efficiency could be improved by adding additional passes and increasing the belt width. The flow rate of water through the water load was 16.5 L/min.

With reference to the table, the Net Delivered Power is the power that is applied to the applicator. It can be calculated by subtracting the reflected power measured at the generator from the forward power provided by the generator. This value was used as it is the actual power which is applied to the product.

Samples were taken from the final run and results are tabulated in Table 4 and compared to samples taken from a conventional backing line and some samples of US made product. All results are favourable with tensile and hardness equal to or higher than both the conventional backing line and US product showing that the PVC is fully cured.

**Table 4 - Test Results of Microwave Backing and comparison to conventional cured backing**

| Microwave Backing Only | | | | | | |
|---|---|---|---|---|---|---|
| Sample # | Kg | Measurements WxL (mm) | Thickness (mm) | Cross Section mm2 | Stress per cm2 | Hardness Duro |
| 1 | 21.5 | 40mm x 100mm | 1.9 | 76 | 28.29 kgs | 82 |
| 2 | 23.7 | 40mm x 100mm | 2.0 | 80 | 29.63 kgs | 86 |
| 3 | 22.2 | 40mm x 100mm | 2.0 | 80 | 27.75 kgs | 88 |
| 4 | 17.8 | 40mm x 100mm | 1.9 | 76 | 23.42 kgs | 87 |
| 5 | 24.0 | 40mm x 100mm | 1.8 | 72 | 33.33 kgs | 85 |
| 6 | 24.8 | 40mm x 100mm | 1.9 | 76 | 32.63 kgs | 86 |
| 7 | 22.6 | 40mm x 100mm | 1.8 | 72 | 31.39 kgs | 85 |
| 8 | 16.2 | 40mm x 100mm | 1.9 | 76 | 21.32 kgs | 83 |
| 9 | 22.1 | 40mm x 100mm | 1.9 | 76 | 29.08 kgs | 81 |
| 10 | 18.0 | 40mm x 100mm | 1.9 | 76 | 23.68 kgs | 85 |
| 11 | 14.7 | 40mm x 100mm | 2.0 | 80 | 18.38 kgs | 88 |
| 12 | 14.5 | 40mm x 100mm | 1.9 | 76 | 19.08 kgs | 85 |
| Compared with Present Conventional Backing Line | | | | | | |
| 13 | 17.5 | 40mm x 100mm | 1.8 | 72 | 24.31 kgs | 83 |
| Compared with US Conventional Backing Line | | | | | | |
| | | | | 0 | 27.57 kgs | |

The energy efficiency of the test was low (see table below) with large amounts of power being transmitted through to the water load. This could be improved by adding more "meandering" wave guide passes to the line and adding width to the line i.e. full scale at 2m wide may be more efficient.

During these tests it was observed that there was some uneven heating across the web. This appeared as three distinct bands and could be seen clearly in thermal images of the runs. Whilst the pattern is indicative of a standing wave in the wave guide it is unlikely that this is the cause and could be related to the dielectric properties of the PVC. During the trials it was shown that by either raising or lowering the line speed or the microwave power one could control the effect of this uneven heating and controlled cure vs. uncured. In the final run, whilst the uneven heating could be seen in the thermal images, there was no sign of it in the visible image or in the finished product. The temperature differences seen across the web were in the order of 5°C and appear to not be of any great significance.

**Energy Calculations**

Calculations of line speed, dimensions and add-on weight

**Table 5 - Energy Efficiency Calculations**

| q=mean heat transfer rate | = m * c_p * dt / t | | |
|---|---|---|---|
| m=mass | kg | | |
| $c_p$=specific Heat | kJ/kg*°C | 1.2 | |
| t=heat up time | s | | |
| dt=temp change | °C | | |
| | | | |
| | | | |
| heating section of tile line = | | 19 | m |
| width of line = | | 2 | m |
| line speed | | 11 | m/min |
| application rate for PVC = | | 2.2 | kg/m$^2$ |
| therefore mass (m) to be heated = | | 83.6 | kg |
| resident time = | | 103.6364 | s |
| start temp = | | 24 | °C |
| target temp = | | 170 | °C |
| temp change | | 146 | °C |
| q = | | 141.328 | kW |
| as mean heat supplied = | | 393.27 | kJ/m$^2$ |
| Note; specific heat shown is typical of PVC, actual value for the PVC used would need to be determined experimentally | | | |

The "Mean Heat Supplied" in the calculations above is the process heat required to cure PVC with no thermal losses i.e. the ideal. Actual heat supplied is 3.05 MJ/m$^2$ as measured on the line.

This shows that there is a possible 87% increase in energy efficiency or that the current process is 87% inefficient i.e. that 87% of the energy used in the current process is wasted. This is close to the ideal "mean heat supplied" number above so an 87% increase in energy efficiency is possible.

The results of the trials for curing PVC have been successful in proving that microwave energy can be used for the effective rapid curing of PVC on a continuous basis and that high energy efficiencies are possible.

Compared to a conventional standard line (less the oil plates, associated oil heaters and hot oil pipework plus the reduced line length), results in an almost equal or slightly less overall capital cost of a full size microwave style line.

Proposed full scale line

A full scale line may be proposed where the heating zones may be reduced from 19 meters to 6.8 meters or less. The full scale line would include 2 off 100k generators, 2 off meander style applicators (5-7 passes each to absorb enough power to make the system efficient - 8 passes are required to absorb 90% of the initial power see below), 2 off water loads and moisture removal and a SCADA control system and would be able to achieve present line speeds of 11 meters/minute. Belt widths may be 2 metres and two layers of PVC with a fibre glass web in the middle may suitably be used (the total thickness of the web may be 1.9mm). It may be appropriate to determine how and where to laminate carpet by finding the gel point of the PVC through the microwave applicator.

In order to calculate the amount of power that would be absorbed and how many passes to use, the data collected was manipulated to show the average amount of power that was absorbed per metre. This value was then used to calculate the amount of power absorbed over two meters. (Power absorbed follows a logarithmic function, this means that each pass will absorb some percentage of the remaining power). Each successive pass absorbs less power than the previous pass as there is progressively less available each consecutive pass as shown below:

**Table 6 Total Power Absorbed (2m Length per Pass)**

| Number of Passes | % Power Absorbed |
|---|---|
| 1 | 24.8 |
| 2 | 43.5 |
| 3 | 57.5 |
| 4 | 68.0 |
| 5 | 76.0 |
| 6 | 81.9 |
| 7 | 86.4 |
| 8 | 89.8 |
| 9 | 92.3 |
| 10 | 94.2 |
| 11 | 95.7 |
| 12 | 96.7 |
| 13 | 97.5 |
| 14 | 98.2 |

In order to calculate the power required for the next stage, the belt width and speed of the conveyor belt were determined. Taking the results from the trial line, the power required could be calculated. The raw data is shown in the following table 7:

**Table 7**

| Run | Belt Speed (m/min) | Web Width (m) | Total Power Absorbed (kW) |
|---|---|---|---|
| 1 | 0.5 | 0.49 | 2.7 |
| 2 | 0.8 | 0.49 | 2.1 |
| 3 | 0.6 | 0.49 | 3.9 |
| 4 | 0.7 | 0.51 | 4.0 |
| 5 | 0.7 | 0.51 | 3.6 |
| 6 | 1 | 0.51 | 3.3 |
| 7 | 1.1 | 0.50 | 3.4 |
| 8 | 1.1 | 0.50 | 3.7 |

Once the absorbed power been calculated, the next step was to convert the results of each run to a value that can be compared easily. This was done by extrapolating from the experimental PVC width to a 1 metre wide belt travelling at 1 metre per minute. This value can be compared between runs and differences in parameters such as belt speed can be taken into account. The results are shown in the following table:

**Table 8 Absorbed Power In PVC**

| Run | Power for 1m belt at 1m/min | Power for 2m belt at 1m/min | Power for 2m belt at 11m/min | Cured |
|-----|------------------------------|------------------------------|-------------------------------|-------|
| 1 | 11.01 | 22.01 | 242.14 | Yes |
| 2 | 5.41 | 10.83 | 119.08 | No |
| 3 | 13.20 | 26.39 | 290.32 | Yes |
| 4 | 11.19 | 22.38 | 246.17 | Yes |
| 5 | 10.01 | 20.02 | 220.17 | Yes |
| 6 | 6.55 | 13.11 | 144.20 | Yes |
| 7 | 6.13 | 12.26 | 134.91 | No |
| 8 | 6.64 | 13.28 | 146.05 | Yes |

The bold rows in the above two tables show the results for the critical run. It can be seen that for a belt width of 2 metres and a speed of 11 metres per minute, a power of 144kW will be needed to fully cure the PVC.

Combining the calculated power required with the calculations done on the power absorbed for different numbers of passes, the total microwave power can be calculated. The following table shows the connected power required depends on the number of passes implemented. High power generators typically come as 50kW, 75kW and 100kW units and this is reflected by the "delivered power" column. The power absorbed shows how much power will be absorbed depending on the actual source power.

**Table 9 Power Required Based on Number of Passes**

| Number of passes | % Power Absorbed | Delivered Power (kW) | Connected Power (kW) | Spare Capacity (kW) |
|------------------|------------------|----------------------|----------------------|---------------------|
| 1 | 24.8 | 581 | 600 | 5 |
| 2 | 43.5 | 332 | 350 | 8 |
| 3 | 57.5 | 251 | 300 | 28 |
| 4 | 68.0 | 212 | 250 | 26 |
| 5 | 76.0 | 190 | 200 | 8 |
| 6 | 81.9 | 176 | 200 | 20 |
| 7 | 86.4 | 167 | 200 | 29 |
| 8 | 89.8 | 161 | 200 | 36 |
| 9 | 92.3 | 156 | 200 | 41 |
| 10 | 94.2 | 153 | 200 | 44 |

In each case, the power absorbed by the PVC web is always 144kW if the delivered power is as shown in the table. The spare capacity refers to the amount of extra power which would be available if the connected power is used.

For a reasonable number of passes, 5 to 7, the connected power would need to be 200kW or two 100kW generators. The applicator would preferably feature two meandering sections and feed from the same or preferably opposite sides of the belt to increase the evenness of heating. If less passes are used, the system becomes progressively less efficient requiring an increasing level of connected power. The heating profile is more even with the more passes used. The heating profile is also more even if the power is fed from both sides.

With regard to the construction of feeds from either side, this system would have an additional waveguide run before the applicator to get the feed on the other side of the belt. The choke system would be continuous between the two parts of the applicator to ensure that any leakage is contained. The operation of the microwave generators would be combined so one operation would control both power outputs.

**Claims**

1.  A method of making a floor covering comprising:

    tufting or implanting a fibrous material or yarn into a primary backing;
    optionally precoating the underside of the primary backing layer by applying a precoating composition followed by curing the precoating;
    applying a PVC thermoplastic backing layer to the optionally precoated primary backing layer; and
    microwave curing the thermoplastic backing layer;
    using a pair of press rollers to apply a force to the PVC thermoplastic backing layer and optionally precoated primary primary backing layer, after heating by microwaves, to cause the layers to bond;
    wherein the method is carried out continuously.

2.  A method of making a floor covering comprising:

    coating a first layer of a PVC thermoplastic resin plastisol on a support surface;
    optionally placing a dimensionally stable sheet material onto the top surface of the first layer and heating the layer to gel the layer and position the sheet material;
    optionally applying a second layer of a thermoplastic resin plastisol onto the gelled surface of the first layer;
    tufting or implanting a fibrous material or yarn into a primary backing material;
    optionally precoating the underside of the primary backing;
    optionally coating a thermoplastic resin plastisol over the optionally precoated primary backing layer;
    layering the optionally precoated primary backing onto the top surface of the plastisol of the first or second thermoplastic resin layer to form a floor covering;
    microwave heating the floor covering so formed to fuse the thermoplastic layers into an integrally-fused backing layer;
    using a pair of press rollers to apply a force to the floor covering heated by microwaves to cause the layers to bond;
    cooling the flooring covering; and
    optionally cutting the floor covering into a carpet tile;
    wherein the method is carried out continuously.

**Patentansprüche**

1.  Ein Verfahren zur Herstellung einer Bodenabdeckung umfassend:

    Tufting oder Einsetzen eines Fasermaterials oder eines Garns in eine erste Stütze;
    gegebenenfalls Vorbeschichtung der Unterseite der ersten Stützschicht durch Anwendung einer Vorbeschichtungszusammensetzung gefolgt von Härten der Vorbeschichtung;
    Aufbringen einer PVC thermoplastischen Stützschicht auf die gegebenenfalls vorbeschichtete erste Stützschicht; und
    Mikrowellenhärtung der thermoplastischen Stützschicht;
    Verwenden eines Paares von Presswalzen, um nach Erhitzen durch Mikrowellen eine Kraft auf die PVC thermoplastische Stützschicht und die gegebenenfalls vorbeschichtete erste Stützschicht anzuwenden, um die Schichten zu verbinden;
    wobei das Verfahren kontinuierlich ausgeführt wird.

2.  Ein Verfahren zur Herstellung einer Bodenabdeckung umfassend:

    Beschichten einer ersten Schicht eines PVC thermoplastischen Harzplastisols auf eine Trägeroberfläche;
    gegebenenfalls Anbringen eines räumlich stabilen Bahnmaterials auf die Oberseite der ersten Schicht und Erhitzen der Schicht, um die Schicht zu gelieren und das Bahnmaterial zu positionieren;
    gegebenenfalls Anwenden einer zweiten Schicht eines thermoplastischen Harzplastisols auf die gelierte Oberfläche der ersten Schicht;
    Tufting oder Einsetzen eines Fasermaterials oder eines Garns in ein erstes Stützmaterial;
    gegebenenfalls Vorbeschichten der Unterseite der ersten Stütze;
    gegebenenfalls Beschichten eines thermoplastischen Harzplastisols über die gegebenenfalls vorbeschichtete erste Stützschicht;

Schichten der gegebenenfalls vorbeschichteten ersten Stütze auf die Oberseite des Plastisols der ersten oder zweiten thermoplastischen Harzschicht, um eine Bodenabdeckung zu bilden;

Mikrowellenerhitzen der so gebildeten Bodenabdeckung, um die thermoplastischen Schichten zu einer integralverschmolzenen Stützschicht zu verschmelzen;

Verwenden eines Paares von Presswalzen, um eine Kraft auf die Bodenabdeckung anzuwenden, die durch Mikrowellen erhitzt wurde, um die Schichten zu verbinden;

Abkühlen der Bodenabdeckung; und

gegebenenfalls Schneiden der Bodenabdeckung in eine Teppichfliese, wobei das Verfahren kontinuierlich ausgeführt wird.

**Revendications**

1. Procédé de fabrication d'un revêtement de sol, comprenant :

le tuftage ou l'implantation d'un matériau fibreux ou d'un fil dans une sous-couche primaire ;

optionnellement, l'application d'un prérevêtement sur le dessous de la sous-couche primaire en appliquant une composition de prérevêtement avec ensuite un durcissement du prérevêtement ;

l'application d'une sous-couche thermoplastique en PVC sur la sous-couche primaire optionnellement pourvue d'un prérevêtement ; et

le durcissement par micro-ondes de la sous-couche thermoplastique ;

l'utilisation d'une paire de rouleaux presseurs pour appliquer une force à la sous-couche thermoplastique en PVC et à la sous-couche primaire optionnellement pourvue d'un prérevêtement, après le chauffage par micro-ondes, afin de provoquer la liaison des couches ;

le procédé étant exécuté en continu.

2. Procédé de fabrication d'un revêtement de sol, comprenant :

l'application d'une première couche d'un plastisol de résine thermoplastique de PVC sur une surface de support ;

optionnellement, la mise en place d'un matériau sous forme de feuille dimensionnellement stable sur la surface supérieure de la première couche et le chauffage de la couche pour gélifier la couche et positionner le matériau sous forme de feuille ;

optionnellement, l'application d'une deuxième couche d'un plastisol de résine thermoplastique sur la surface gélifiée de la première couche ;

le tuftage ou l'implantation d'un matériau fibreux ou d'un fil dans un matériau de sous-couche primaire ;

optionnellement, l'application d'un prérevêtement sur le dessous de la sous-couche primaire ;

optionnellement, l'application d'un plastisol de résine thermoplastique sur la sous-couche primaire optionnellement pourvue d'un prérevêtement ;

la superposition de la sous-couche primaire optionnellement pourvue d'un prérevêtement sur la surface supérieure du plastisol de la première ou de la deuxième couche de résine thermoplastique pour former un revêtement de sol ;

le chauffage par micro-ondes du revêtement de sol ainsi formé pour fusionner les couches thermoplastiques afin d'en faire une sous-couche fusionnée en une seule pièce ;

l'utilisation d'une paire de rouleaux presseurs pour appliquer une force au revêtement de sol chauffé par les micro-ondes afin de provoquer la liaison des couches ;

le refroidissement du revêtement de sol ; et

optionnellement, le découpage du revêtement de sol en une dalle de moquette ;

le procédé étant exécuté en continu.

**FIGURE 1**

FIGURE 2

FIGURE 3

Coax to
Waveguide
Transition

Waveguide

PVC Paste

Lossless Material

FIGURE 4

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 4234636 A
- US 7368692 B1
- GB 1267654 A
- US 4689256 A